# FASCICULE DE BREVET EUROPEEN

(11) **EP 3 963 190 B1**
(45) Date de publication et mention de la délivrance du brevet: **15.03.2023**
(21) Numéro de dépôt: 20714263.9
(22) Date de dépôt: 02.04.2020
(51) Int. Cl.: F02C 3/067, F02C 7/06

(54) **ARCHITECTURE AMÉLIORÉE DE TURBOMACHINE À TURBINE CONTRAROTATIVE**
VERBESSERTE ARCHITEKTUR EINER TURBOMASCHINE MIT GEGENLÄUFIGER TURBINE
IMPROVED ARCHITECTURE OF A TURBOMACHNE WITH COUNTER-ROTATING TURBINE

(30) Priorité: 30.04.2019 FR 1904590
(43) Date de publication de la demande: 09.03.2022
(73) Titulaire: SAFRAN AIRCRAFT ENGINES, 75015 Paris (FR)
(72) Inventeur: GALLET, François, 77550 MOISSY-CRAMAYEL (FR)
(74) Mandataire: Cabinet Beau de Loménie
(86) Numéro de dépôt international: PCT/EP2020/059453
(87) Numéro de publication internationale: WO 2020/221548

(56) Documents cités:
- DE-A1- 3 728 437
- FR-A1- 2 874 238
- GB-A- 2 155 110

## Description

### Domaine Technique

Le présent exposé concerne le domaine des turbomachines. Plus précisément, le présent exposé concerne une turbine contrarotative de turbomachine, et une turbomachine comprenant une telle turbine.

### Technique antérieure

Une turbomachine d'aéronef comprend généralement, d'amont en aval dans le sens d'écoulement des gaz, une soufflante, un compresseur basse pression, un compresseur haute pression, une chambre de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

Afin d'améliorer le rendement du moteur, les turbomachines d'aéronef peuvent être équipées d'une turbine contrarotative, à la place de la turbine basse pression. La turbine contrarotative comprend un rotor interne, dit rotor rapide, relié à un premier arbre de turbine, et configuré pour tourner dans un premier sens de rotation, et un rotor externe, dit rotor lent, relié à un second arbre de turbine, et configuré pour tourner dans un deuxième sens de rotation, opposé au premier sens de rotation. Les aubes du premier rotor sont intercalées avec les aubes du deuxième rotor.

De manière connue, le premier arbre de turbine est notamment centré et guidé par un palier monté entre le premier arbre et un carter de turbine amont (ou carter « TVF » pour « turbine vane frame » en anglais), disposé en amont de la turbine contrarotative, et le deuxième arbre de turbine est centré et guidé par un autre palier monté entre le deuxième arbre et un carter de turbine aval (ou carter « TRF » pour « turbine rear frame » en anglais), disposé en aval de la turbine contrarotative. FR 2 874 238 A1 et DE 37 28 437 A1 divulguent des exemples de turbines contrarotatives comprenant de tels paliers.

Néanmoins, cette architecture présente certains inconvénients. Notamment, la position du palier guidant le deuxième arbre oblige ce dernier à être très long, et est donc soumis à des efforts de flexion importants. Or, une flexion importante du deuxième arbre par rapport au premier arbre peut engendrer l'apparition de jeux entre les rotors, ou la modification de jeux déjà existants. Par ailleurs, les paliers des premier et deuxième arbres étant portés par des structures différentes (carter amont pour le premier arbre et carter aval pour le deuxième arbre), les déformations locales de ces carters, causées par des dilatations, des distorsions ou des effets gyroscopiques, engendrent des déplacements différents de ces arbres, et donc l'apparition de jeux entre différentes portions des rotors. Par exemple, des déplacements relatifs entre le premier et le deuxième rotor peuvent entraîner l'apparition d'un jeu entre les aubes du premier rotor et la piste abradable du deuxième rotor. De tels jeux, provoqués par des déformations différentielles des rotors, peuvent entraîner des fuites qui nuisent aux performances de la turbomachine.

De plus, les architectures connues de ces turbines contrarotatives impliquent un confinement rotor externe dans un carter extérieur, et donc des températures importantes de ce dernier. En effet, la présence d'un tel carter extérieur est nécessaire pour porter à la fois le carter amont et le carter aval de la turbine, et ainsi assurer le lien structural entre le carter amont et le carter aval. Le fait que ce rotor externe soit confiné dans un carter extérieur limite la possibilité d'installer un dispositif de refroidissement pour ce rotor, ou d'installer des moyens de mesures pour les aubes, tels que des endoscopes. Il existe donc un besoin pour une architecture de turbine contrarotative permettant de palier au moins en partie les inconvénients ci-dessus.

### Exposé de l'invention

Le présent exposé concerne une turbine contrarotative de turbomachine telle que définie dans la revendication 1, s'étendant autour d'un axe de rotation et comprenant :
- un rotor interne configuré pour tourner autour de l'axe de rotation, et comprenant au moins une aube mobile interne supportée en rotation par un premier arbre,
- un rotor externe configuré pour tourner autour de l'axe de rotation dans un sens opposé au rotor interne, et comprenant au moins une aube mobile externe supportée en rotation par un deuxième arbre coaxial au premier arbre, les premier et deuxième arbres s'étendant axialement de l'amont vers l'aval de la turbine,
dans lequel le premier arbre est guidé en rotation par un premier palier disposé entre le premier arbre et un carter amont de la turbine, et le deuxième arbre est guidé en rotation par un deuxième palier disposé entre le deuxième arbre et ledit carter amont de la turbine.

Dans le présent exposé, les termes « interne » et « externe », et les termes « intérieur » et « extérieur » et leurs dérivés sont considérés selon la direction radiale de la turbine. De même, les termes « amont » et « aval » sont considérés selon le sens d'écoulement des gaz dans la turbomachine, le long de l'axe de rotation.

Le premier et le deuxième arbre peuvent être tubulaires, et sont coaxiaux, en s'entendant le long de l'axe de rotation. Par « disposé entre le premier arbre et un carter amont de la turbine», on comprend que le premier palier, et donc le premier arbre, sont portés par le carter amont, une extrémité externe, ou bague externe, du premier palier étant fixée au carter amont, une extrémité interne, ou bague interne, du premier palier étant fixée au premier arbre.

Par « disposé entre le deuxième arbre et ledit carter amont de la turbine», on comprend que le deuxième palier, et donc le deuxième arbre, sont portés, éventuellement indirectement, par le carter amont. En d'autres termes, les efforts exercés par le deuxième arbre, par exemple les efforts de flexion, sont transmis au carter amont, sans que l'extrémité externe, ou bague externe du deuxième palier soit nécessairement en contact direct avec le carter amont. Par « éventuellement indirectement », on comprend qu'un autre élément peut être intercalé entre le carter amont et le deuxième palier, cet élément pouvant être par exemple le premier arbre et le premier palier. En outre, l'extrémité interne, ou bague interne du deuxième palier est fixée au deuxième arbre.

Ainsi, le premier et le deuxième paliers sont tous deux portés in fine par le même carter, c'est-à-dire par le carter amont. Par conséquent, les déformations dues par exemple à une dilatation du carter amont au cours du fonctionnement de la turbine, sont transmises à chacun des deux paliers conjointement, de telle sorte que ces derniers se déplaceront simultanément l'un et l'autre. L'absence de déplacement différentiel d'un carter par rapport à un autre limite ainsi le risque d'apparition ou de modifications de jeux entre différentes portions des rotors, causés par exemple par des déplacements relatifs entre le premier et le deuxième rotor. La limitation de ces jeux provoqués par des déformations différentielles des rotors permettent ainsi de limiter le risque d'apparition de fuites, et d'améliorer le rendement et les performances et de la turbomachine.

De plus, les paliers étant tous les deux portés par le carter amont, le carter aval généralement présent sur les turbines selon l'état de la technique, n'est plus nécessaire pour porter le deuxième palier, et peut par conséquent être supprimé. Cela permet de minimiser la masse de la turbine.

Dans certains modes de réalisation, la au moins une aube mobile interne est supportée en rotation par une portion du premier arbre en porte à faux par rapport au premier palier, et la au moins une aube mobile externe est supportée en rotation par une portion du deuxième arbre en porte à faux par rapport au deuxième palier.

Par « en porte à faux », on comprend que les aubes internes sont portées par le premier arbre à une position située en aval du premier palier, et les aubes externes sont portées par le deuxième arbre à une position située en aval du deuxième palier. En d'autres termes, compte tenu du fait que les deux paliers sont portés par le carter amont, le support des rotors interne et externe par le premier et le deuxième arbre est effectué en aval des deux paliers, selon l'axe de rotation.

Dans certains modes de réalisation, le deuxième palier est disposé entre le deuxième arbre et le premier arbre.

En d'autres termes, une extrémité externe du deuxième palier est fixée au premier arbre, et une extrémité interne du premier palier est fixée au premier arbre. Autrement dit, le premier et le deuxième palier sont disposés et fixés de part et d'autre de la paroi du premier arbre, et sont tous deux portés par le carter amont.

Dans certains modes de réalisation, les premier et deuxième paliers sont disposés sensiblement au droit l'un de l'autre le long de l'axe de rotation.

En d'autres termes, les premier et deuxième paliers sont disposés sensiblement sur un même plan radial normal à l'axe de rotation. Ainsi, des forces de déformations provenant du carter amont sont plus efficacement transmises du premier palier au deuxième palier, le chemin des efforts étant minimisé. Par conséquent, un déplacement, par exemple une flexion, du premier arbre engendrera un déplacement sensiblement identique du deuxième arbre. Les risques de déplacements différentiels entre le rotor interne et le rotor externe sont ainsi davantage limités.

Dans certains modes de réalisation, les premier et deuxième paliers sont disposés sensiblement au niveau d'un plan médian de la turbine selon l'axe de rotation.

Le plan médian, ou centre géométrique, désigne le centre, suivant l'axe de rotation, de la longueur totale de la turbine. Selon cette configuration, la turbine est moins sensible aux effets gyroscopiques. En d'autres termes, cette position des premier et deuxième paliers permet de s'assurer que les mouvements de flexions des premiers et deuxième arbres, se traduisant par des rotations des rotors autour d'un axe perpendiculaire à l'axe de rotation de la turbine, vont engendrer des déplacements principalement axiaux en sommets d'aubes, et peu de déplacements radiaux, et par conséquent peu d'apparition ou de modifications des jeux entre les rotors interne et externe.

En outre, le deuxième palier étant disposé au niveau d'un plan médian de la turbine et étant porté par le carter amont, et non plus par le carter aval, il est ainsi possible de réduire la longueur du deuxième arbre. Les efforts de flexion auxquels le deuxième arbre est soumis sont donc minimisés, limitant ainsi davantage l'apparition de jeux entre les rotors, ou la modification de jeux déjà existants.

La turbine comprend un carter externe entourant au moins partiellement le rotor externe, le carter externe s'étendant axialement depuis une extrémité amont de la turbine, jusqu'à une position disposée en amont d'une extrémité aval de la turbine.

Selon l'invention, le carter externe s'étend axialement depuis l'extrémité amont de la turbine sur une longueur inférieure à 50%, de préférence inférieure à 30%, de préférence encore inférieure à 15% de la longueur de la turbine.

Compte tenu du fait que le premier et le deuxième palier sont tous les deux portés par le carter amont, le carter aval généralement présent sur les turbines selon l'état de la technique, n'est plus nécessaire pour porter le deuxième palier, et peut par conséquent être supprimé. Il n'est, de plus, plus nécessaire non plus de disposer un carter externe, pour porter le carter aval et entourant le rotor externe sur toute la longueur de celui-ci. Ainsi, la portion aval du rotor externe n'est plus confinée. Par conséquent, un dispositif de refroidissement peut être disposé afin de refroidir directement cette portion aval, et des dispositifs de mesure tels que des endoscopes peuvent être plus aisément mis en place. Il est également possible de loger des dispositifs d'étanchéité, tels que des joints labyrinthes ou des joints radiaux segmentés, entre les rotor et stator, permettant de limiter les fuites de la turbine.

Dans certains modes de réalisation, la turbine comprend un dispositif de lubrification configuré pour acheminer et évacuer un fluide de lubrification à travers le carter amont, et pour lubrifier au moins les premier et deuxième paliers par l'intermédiaire du fluide de lubrification.

Les premier et deuxième paliers étant adjacents l'un à l'autre, il est ainsi possible de simplifier le dispositif de lubrification, notamment en raccourcissant ce dernier. En effet, un seul circuit de lubrification est nécessaire pour lubrifier conjointement le premier et le deuxième palier. Pour ce faire, les premier et deuxième arbres peuvent comporter des orifices permettant l'écoulement du fluide de lubrification entre le premier et le deuxième palier.

Dans certains modes de réalisation, les premier et deuxième paliers sont des roulements à billes.

Dans certains modes de réalisation, les premier et deuxième paliers sont des roulements à rouleaux. Les roulements à rouleaux permettent de contrer plus efficacement les dilatations différentielles.

Le présent exposé concerne également une turbomachine comprenant la turbine selon l'un quelconque des modes de réalisation précédents.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une vue générale illustrant le principe de fonctionnement d'une turbomachine à soufflantes contrarotatives selon l'état de la technique,
[Fig. 2] La figure 2 représente une vue schématique d'une turbine basse-pression selon le présent exposé.

### Description des modes de réalisation

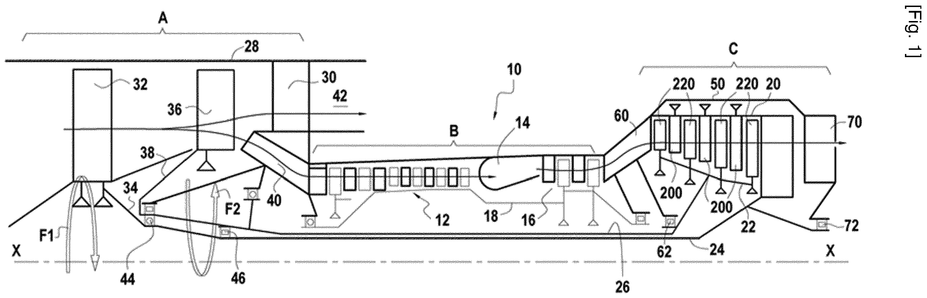

En référence à la figure 1, une turbomachine 10 à soufflantes contrarotatives comporte un axe longitudinal X-X. D'amont en aval selon le sens d'écoulement des gaz dans la turbomachine (représenté par la flèche noire), la turbomachine 10 comprend essentiellement trois parties: un module amont A (ou section de soufflante), un module intermédiaire B (ou corps haute-pression) et un module aval C (ou section de turbine basse pression).

Les trois parties A, B et C de la turbomachine sont modulaires, c'est-à-dire qu'elles forment chacune un seul ensemble et peuvent être remplacées chacune en étant séparées des autres parties de la turbomachine.

De façon bien connue en soi, le corps haute-pression B comprend un générateur de gaz pour produire des gaz de combustion. Ce générateur de gaz comprend un compresseur 12, une chambre de combustion 14 et une turbine haute-pression 16.

L'air comprimé par le compresseur 12 est mélangé au carburant dans la chambre de combustion 14 avant d'y être brûlé. Les gaz de combustion ainsi produits entraînent les aubes mobiles de la turbine haute-pression 16 qui elle-même entraîne le compresseur 12 par l'intermédiaire d'un arbre haute-pression 18. La circulation des gaz de combustion dans la turbomachine 10 se fait axialement d'amont en aval.

La section de turbine basse-pression C comprend un premier rotor annulaire, ou rotor externe 20. Ce rotor externe 20 comprend une rangée d'aubes mobiles externes de turbine 200 qui s'étendent radialement vers l'intérieur et qui sont espacées axialement les unes des autres.

La section de turbine basse-pression C comprend également un second rotor annulaire, ou rotor interne 22. Ce rotor interne 22 comprend une rangée d'aubes mobiles internes de turbine 220 qui s'étendent radialement vers l'extérieur et qui sont espacées axialement les unes des autres. Les aubes de turbine 200, 220 des rotors interne et externe 20, 22 sont disposées en alternance les unes par rapport aux autres de telle sorte que les rotors interne et externe 20, 22 sont imbriqués les uns dans les autres.

Les aubes mobiles de turbine 200 du rotor externe 20 sont supportées en rotation par un premier arbre basse-pression 24. De même, les aubes mobiles de turbine 220 du rotor interne 22 sont supportées en rotation par un second arbre basse-pression 26 disposé de façon coaxiale autour du premier arbre 24. Les arbres basse-pression 24, 26 s'étendent axialement de l'amont vers l'aval de l'axe X de la turbomachine. Les rotors interne et externe 20, 22 sont entourés par un carter externe 50.

La section de turbine basse-pression C est traversée par les gaz de combustion provenant du corps haute-pression B. Ces gaz de combustion entraînent donc en rotation les aubes de turbine 200, 220 des rotors interne et externe 20, 22 dans des sens opposés. Ainsi, les premier et second arbres basse-pression 24, 26 tournent également de façon contrarotative.

La section de soufflante A est située à l'amont de la turbomachine 10. Un capot 28 entoure de façon annulaire cette section de soufflante A. Le capot 28 est supporté par des entretoises 30 qui s'étendent radialement vers l'intérieur de la turbomachine.

La section de soufflante A comporte une première rangée d'aubes de soufflante 32 montées sur un arbre de soufflante amont 34 qui est relié à une extrémité amont du premier arbre basse-pression 24.

La section de soufflante A comporte également une seconde rangée d'aubes de soufflante 36 qui sont espacées axialement vers l'aval de la première rangée d'aubes de soufflante 32 et montées sur un arbre de soufflante arrière 38 relié à une extrémité amont du second arbre basse-pression 26.

Les première et seconde rangées d'aubes de soufflante 32, 36 tournent ainsi dans des directions opposées qui sont représentées, à titre d'exemple, par les flèches respectives F1 et F2. Cette configuration à soufflantes contrarotatives confère ainsi à la turbomachine un rendement élevé pour une consommation spécifique relativement faible.

Les aubes de soufflante 32, 36 s'étendent radialement depuis les arbres de soufflante amont 34 et aval 38 pratiquement jusqu'au capot 28. Elles sont disposées dans le passage de circulation de l'air alimentant à la fois la veine primaire 40 conduisant au compresseur 12 du corps haute pression B et la veine secondaire 42 de contournement.

Au niveau de son extrémité amont, le premier arbre basse-pression 24 supporte en rotation le second arbre basse-pression 26 par l'intermédiaire d'un premier palier à roulement 44 et d'un second palier à roulement 46 disposé en aval du premier.

Le premier palier à roulement 44 est du type à billes pour tenir aux charges axiales, tandis que le second palier à roulement 46 est du type à rouleaux pour tenir aux charges radiales de la turbomachine.

Au niveau de son extrémité aval, le premier arbre basse-pression 24 est centré et guidé par un palier 72 monté entre le premier arbre 24 et un carter aval 70 (ou carter TRF, ou carter d'échappement) de turbine. Par ailleurs, au niveau de son extrémité aval, le deuxième arbre basse-pression 26 est centré et guidé par un palier 62 monté entre le deuxième arbre 26 et un carter amont 60 (ou carter TVF) de turbine. Les paliers 62 et 72 peuvent être des roulements à rouleaux ou des roulements à billes.

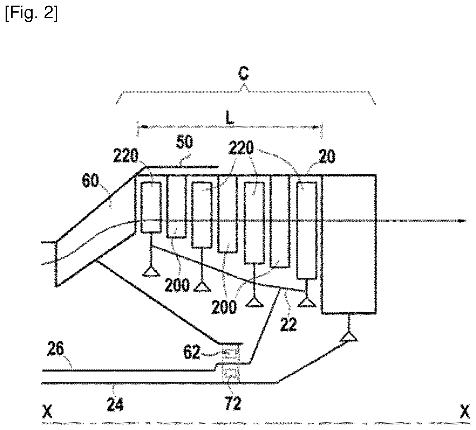

La suite de la description décrit, en référence à la figure 2, un agencement des paliers de la turbine contrarotative du présent exposé, notamment de la turbine basse pression C de la turbomachine 10. Néanmoins, ce mode de réalisation ne se limite pas à cette turbine basse pression, et peut s'adapter à d'autres éléments de la turbomachine, par exemple la turbine haute pression.

Selon ce mode de réalisation, les paliers 62 et 72 des premier et deuxième arbres basse pression 24, 26 sont déplacés axialement le long de l'axe de rotation X, par rapport à leur position décrite en référence à la figure 1. Plus précisément, le palier 62 est toujours monté entre le deuxième arbre 26 et le carter amont 60 de turbine. Cependant, selon cette configuration, le palier 72 est monté entre le premier arbre 24 et le carter amont 60 de turbine également. En d'autres termes, les paliers 62 et 72 sont tous les deux portés par le même carter amont 60.

En particulier, le palier 72 est disposé entre le premier arbre 24 et le deuxième arbre 26. Le palier 72 est donc un palier inter-arbre, dans lequel son extrémité externe est fixée au deuxième arbre 26 tournant dans un sens, et son extrémité interne est fixée au premier arbre 24 tournant dans un sens opposé au premier arbre 24.

De plus, les paliers 62 et 72 peuvent être disposés au droit l'un de l'autre, c'est-à-dire être sensiblement alignés l'un et l'autre selon une direction radiale. En d'autres termes, ils peuvent être disposés sensiblement à une même position axiale, le long de l'axe X. De préférence, cette position correspond à un centre géométrique de la turbine C. Plus précisément, lorsque la turbine C s'étend axialement sur une longueur L entre l'aube située la plus en amont le long de l'axe X, et l'aube située la plus en aval, les paliers 62 et 72 sont disposés à une distance sensiblement égale à L/2 depuis l'aube située la plus en amont, le long de l'axe X. Dans l'exemple de la figure 2, le rotor interne 22 comprend quatre aubes 220, et le rotor externe 20 comprend trois aubes 200 disposées entre les aubes internes 220. Par conséquent, les paliers 62 et 72 sont disposés sensiblement à la même position axiale que l'aube centrale 200 du rotor interne 20.

Selon cette configuration, le premier arbre 24 est plus court que selon la configuration présentée en référence à la figure 1. Ainsi, les efforts de flexion auxquels le premier arbre 24 est soumis sont minimisés.

Les paliers 62 et 72 étant tous les deux portés par le carter amont 60, le carter aval 70 n'est plus nécessaire pour porter le palier 72, et peut par conséquent être supprimé, afin de minimiser la masse de la turbine C. De même, contrairement à la turbine décrite en référence à la figure 1, le carter externe 50 ne s'étend axialement que sur une portion inférieure à 50%, de préférence inférieure à 30%, de préférence encore inférieure à 15% de la longueur L de la turbine. Ainsi, la portion aval du rotor externe 20 n'est plus confinée par le carter externe 50. Les températures atteintes par le rotor externe 20 seront donc moins importantes que dans une configuration dans laquelle ce dernier est entièrement entouré par le carter externe 50, limitant ainsi les risques de pannes. Par ailleurs, un dispositif de refroidissement (non représenté) peut être plus aisément mis en place afin de refroidir directement cette portion aval. De plus cette configuration rend le rotor externe plus accessible. Il est ainsi possible d'inspecter plus aisément ce dernier, par l'intermédiaire d'un endoscope par exemple, sans avoir à démonter le moteur.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Turbine contrarotative (C) de turbomachine (10) s'étendant autour d'un axe de rotation (X) et comprenant :
- un rotor interne (22) configuré pour tourner autour de l'axe de rotation (X), et comprenant au moins une aube mobile interne (220) supportée en rotation par un premier arbre (26),
- un rotor externe (20) configuré pour tourner autour de l'axe de rotation (X) dans un sens opposé au rotor interne (22), et comprenant au moins une aube mobile externe (200) supportée en rotation par un deuxième arbre (24) coaxial au premier arbre (26), les premier et deuxième arbres (24, 26) s'étendant axialement de l'amont vers l'aval de la turbine (C),
dans lequel le premier arbre (26) est guidé en rotation par un premier palier (62) disposé entre le premier arbre et un carter amont (60) de la turbine, et le deuxième arbre (24) est guidé en rotation par un deuxième palier (72) disposé entre le deuxième arbre (24) et ledit carter amont (60) de la turbine, la turbine contrarotative (C) étant **caractérisée en ce qu'**elle comprend un carter externe (50) entourant au moins partiellement le rotor externe (20), le carter externe (50) s'étendant axialement depuis une extrémité amont de la turbine (C), sur une longueur inférieure à 50%, de préférence inférieure à 30%, de préférence encore inférieure à 15% de la longueur de la turbine (C).

2. Turbine (C) selon la revendication 1, dans laquelle la au moins une aube mobile interne (220) est supportée en rotation par une portion du premier arbre (26) en porte à faux par rapport au premier palier (62), et la au moins une aube mobile externe (200) est supportée en rotation par une portion du deuxième arbre (24) en porte à faux par rapport au deuxième palier (72).

3. Turbine (C) selon la revendication 1 ou 2, dans laquelle le deuxième palier (72) est disposé entre le deuxième arbre (24) et le premier arbre (26).

4. Turbine (C) selon l'une quelconque des revendications 1 à 3, dans laquelle les premier et deuxième paliers (62, 72) sont disposés sensiblement au droit l'un de l'autre le long de l'axe de rotation (X).

5. Turbine (C) selon l'une quelconque des revendications 1 à 4, dans laquelle les premier et deuxième paliers (62, 72) sont disposés sensiblement au niveau d'un plan médian de la turbine (C) selon l'axe de rotation (X).

6. Turbine (C) selon l'une quelconque des revendications 1 à 5, comprenant un dispositif de lubrification configuré pour acheminer et évacuer un fluide de lubrification à travers le carter amont (60), et pour lubrifier au moins les premier et deuxième paliers (62, 72) par l'intermédiaire du fluide de lubrification.

7. Turbine (C) selon l'une quelconque des revendications 1 à 6, dans laquelle les premier et deuxième paliers (62, 72) sont des roulements à rouleaux.

8. Turbomachine comprenant la turbine (C) selon l'une quelconque des revendications précédentes.

## Patentansprüche

1. Gegenläufige Turbine (C) einer Turbomaschine (10), die sich um eine Rotationsachse (X) erstreckt und umfasst:
- einen inneren Rotor (22), der ausgelegt ist, um um die Rotationsachse (X) zu drehen und mindestens eine innere bewegliche Schaufel (220) umfasst, die von einer ersten Welle (26) rotatorisch getragen wird,
- einen äußeren Rotor (20), der ausgelegt ist, um um die Rotationsachse (X) in einer zum inneren Rotor (22) entgegengesetzten Richtung zu drehen und mindestens eine äußere bewegliche Schaufel (200) umfasst, die von einer zweiten Welle (24), die koaxial zur ersten Welle (26) ist, rotatorisch getragen wird, wobei sich die erste und zweite Welle (24, 26) axial von vor nach hinter der Turbine (C) erstrecken,
wobei die erste Welle (26) von einem ersten Lager (62) rotatorisch geführt wird, das zwischen der ersten Welle und einem der Turbine vorgelagerten Gehäuse (60) angeordnet ist, und die zweite Welle (24) von einem zweiten Lager (72) rotatorisch geführt wird, das zwischen der zweiten Welle (24) und dem der Turbine vorgelagerten Gehäuse (60) angeordnet ist, wobei die gegenläufige Turbine (C) **dadurch gekennzeichnet ist, dass** sie ein äußeres Gehäuse (50) umfasst, das den äußeren Rotor (20) mindestens teilweise umgibt, wobei sich das äußere Gehäuse (50) axial ab einem der Turbine (C) vorgelagerten Ende über eine Länge unter 50%, vorzugsweise unter 30%, noch vorzugsweiser unter 15% der Länge der Turbine (C) erstreckt.

2. Turbine (C) nach Anspruch 1, wobei die mindestens eine innere bewegliche Schaufel (220) von einem Abschnitt der ersten Welle (26) im Verhältnis zum ersten Lager (62) überhängend rotatorisch getragen wird und die mindestens eine äußere bewegliche Schaufel (200) von einem Abschnitt der zweiten Welle (24) im Verhältnis zum zweiten Lager (72) überhängend rotatorisch getragen wird.

3. Turbine (C) nach Anspruch 1 oder 2, wobei das zweite Lager (72) zwischen der zweiten Welle (24) und der ersten Welle (26) angeordnet ist.

4. Turbine (C) nach einem der Ansprüche 1 bis 3, wobei das erste und zweite Lager (62, 72) etwa nebeneinander entlang der Rotationsachse (X) angeordnet sind.

5. Turbine (C) nach einem der Ansprüche 1 bis 4, wobei das erste und zweite Lager (62, 72) etwa im Bereich einer Mittelebene der Turbine (C) gemäß der Rotationsachse (X) angeordnet sind.

6. Turbine (C) nach einem der Ansprüche 1 bis 5, umfassend eine Schmiervorrichtung, die ausgelegt ist, um ein Schmierfluid durch das vorgelagerte Gehäuse (60) zu transportieren und abzuleiten, und um mindestens das erste und zweite Lager (62, 72) mit dem Schmierfluid zu schmieren.

7. Turbine (C) nach einem der Ansprüche 1 bis 6, wobei das erste und zweite Lager (62, 72) Wälzlager sind.

8. Turbomaschine, die die Turbine (C) nach einem der vorangehenden Ansprüche umfasst.

## Claims

1. A counter-rotating turbine (C) of a turbomachine (10), extending about an axis of rotation (X) and comprising:
- an inner rotor (22) configured to rotate about the axis of rotation (X), and comprising at least one inner movable blade (220) rotatably supported by a first shaft (26),
- an outer rotor (20) configured to rotate about the axis of rotation (X) in a direction opposite to the inner rotor (22), and comprising at least one outer movable blade (200) rotatably supported by a second shaft (24) coaxial with the first shaft (26), the first and second shafts (24, 26) extending axially from upstream to downstream of the turbine (C),
wherein the first shaft (26) is guided in rotation by a first bearing (62) disposed between the first shaft and an upstream casing (60) of the turbine, and the second shaft (24) is guided in rotation by a second bearing (72) disposed between the second shaft (24) and said upstream casing (60) of the turbine, the counter-rotating turbine (C) being **characterized in that** it comprises an outer casing (50) at least partially surrounding the outer rotor (20), the outer casing (50) extending axially from an upstream end of the turbine (C), over a length of less than 50%, preferably less than 30%, more preferably less than 15% of the length of the turbine (C).

2. The turbine (C) according to claim 1, wherein the at least one inner movable blade (220) is rotatably supported by a portion of the first shaft (26) cantilevered from the first bearing (62), and the at least one outer movable blade (200) is rotatably supported by a portion of the second shaft (24) cantilevered from the second bearing (72).

3. The turbine (C) according to claim 1 or 2, wherein the second bearing (72) is disposed between the second shaft (24) and the first shaft (26).

4. The turbine (C) according to any one of claims 1 to 3, wherein the first and second bearings (62, 72) are disposed substantially in line with each other along the axis of rotation (X).

5. The turbine (C) according to any one of claims 1 to 4, wherein the first and second bearings (62, 72) are disposed substantially at a median plane of the turbine (C) according to the axis of rotation (X).

6. The turbine (C) according to any one of claims 1 to 5, comprising a lubrication device configured to convey and discharge a lubricating fluid through the upstream casing (60), and to lubricate at least the first and second bearings (62, 72) via the lubricating fluid.

7. The turbine (C) according to any one of claims 1 to 6, wherein the first and second bearings (62, 72) are roller bearings.

8. A turbomachine comprising the turbine (C) according to any one of the preceding claims.
